(19) **Europäisches Patentamt / European Patent Office / Office européen des brevets**

(11) **EP 3 245 771 B1**

(12) # EUROPEAN PATENT SPECIFICATION

(45) Date of publication and mention of the grant of the patent:
**21.04.2021 Bulletin 2021/16**

(21) Application number: **15878254.0**

(22) Date of filing: **11.09.2015**

(51) Int Cl.:
**H04L 27/26** *(2006.01)*    **H04L 5/22** *(2006.01)*

(86) International application number:
**PCT/US2015/049713**

(87) International publication number:
**WO 2016/114824 (21.07.2016 Gazette 2016/29)**

(54) **APPARATUS AND METHOD OF PROVIDING A FLEXIBLE GUARD INTERVAL FOR BLOCK SINGLE CARRIER TRANSMISSION**

VORRICHTUNG UND VERFAHREN ZUR BEREITSTELLUNG EINES FLEXIBLEN SCHUTZINTERVALLS ZUR BLOCKEINZELTRÄGERÜBERTRAGUNG

APPAREIL ET PROCÉDÉ POUR FOURNIR UN INTERVALLE DE PROTECTION FLEXIBLE POUR UNE TRANSMISSION DE PORTEUSE UNIQUE DE BLOC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2015 US 201562103708 P**
**31.03.2015 US 201562141011 P**

(43) Date of publication of application:
**22.11.2017 Bulletin 2017/47**

(73) Proprietor: **Apple Inc.**
**Cupertino, CA 95014 (US)**

(72) Inventors:
• **KUMAR, Utsaw**
  **Santa Clara, CA 95054 (US)**
• **NIU, Huaning**
  **Santa Clara, CA 95054 (US)**
• **IBARS CASAS, Christian**
  **San Jose, CA 95118 (US)**
• **JUNG, Hyejung**
  **Palatine, IL 60067 (US)**
• **ZONG, Pingping**
  **Randolph, NJ 07869 (US)**

(74) Representative: **Wardle, Callum Tarn**
**Withers & Rogers LLP**
**4 More London Riverside**
**London**
**SE1 2AU (GB)**

(56) References cited:
**EP-A2- 1 014 639      WO-A2-2006/105005
US-A1- 2009 257 366      US-A1- 2011 261 730**

• **BERARDINELLI GILBERTO ET AL: "On the Potential of Zero-Tail DFT-Spread-OFDM in 5G Networks", 2014 IEEE 80TH VEHICULAR TECHNOLOGY CONFERENCE (VTC2014-FALL), IEEE, 14 September 2014 (2014-09-14), pages 1-6, XP032694773, DOI: 10.1109/VTCFALL.2014.6966089 [retrieved on 2014-11-24]**
• **KUMAR UTSAW ET AL: "A Waveform for 5G: Guard Interval DFT-s-OFDM", 2015 IEEE GLOBECOM WORKSHOPS (GC WKSHPS), IEEE, 6 December 2015 (2015-12-06), pages 1-6, XP032871229, DOI: 10.1109/GLOCOMW.2015.7414204 [retrieved on 2016-02-18]**
• **FRANCE TELECOM ET AL.: 'OFDM/OQAM technical overview' R1-050922, 3GPP TSG RAN WG1#42 29 August 2005, LONDON, UK, pages 1 - 6, XP050100542**

EP 3 245 771 B1

**Description**

**TECHNICAL FIELD**

Embodiments pertain to radio access networks. Some embodiments relate to cyclic prefixes and guard intervals in cellular networks, including Third Generation Partnership Project Long Term Evolution (3GPP LTE) networks and LTE advanced (LTE-A) networks as well as 4th generation (4G) networks and 5th generation (5G) networks.

**BACKGROUND**

The use of personal communication devices has increased astronomically over the last two decades. The penetration of cellular telephones and smartphones (the latter now over 50% in the United States and 1.76 billion people worldwide) in modern society has continued to drive demand for a number of types of networked devices in a wide variety of environments. The use of networking using 3GPP LTE systems has increased in all areas of home and work life.

In many of the diverse locations, notably urban environments, in which communication devices are disposed, multiple different paths between communication endpoints may exist. In this case, the length of the various paths may differ, causing the same signal transmitted from the transmitting communication device to arrive at the receiving communication device at slightly different times and thereby causing spreading of the signal referred to as delay spread. Delay spread may thus be an inherent environmental effect rather than an issue generated by the communication devices, which may lead to different delay spreads in different environments.

It may be desirable to provide a mechanism to allow communication devices to mitigate for delay spread while minimizing communication inefficiencies involved in compensating for the delay spread.

Berardinelli Gilberto et al: "On the potential of zero-tail DFT-spread-OFDM in 5G networks", 2014 IEEE 80th Vehicular Technology Conference (VTC2014-FALL), IEEE, pages 1-6, September 2014 relates to zero-tail Discrete Fourier Transform - spread OFDM (ZT DFT-s-OFDM) modulation, which allows to dynamically cope with the delay spread of the multipath channel, thus avoiding the limitations of hard-coded Cyclic Prefix (CP). In this paper, it is discussed the potential of ZT DFT-s-OFDM modulation for the envisioned 5th generation (5G) radio access technology, characterized by an ultra-dense deployment of small cells and the support of novel paradigms such as Device-to-Device (D2D). It is addressed the benefits of ZT DFT-s-OFDM in terms of coexistence among devices operating over adjacent frequency chunks, possibility of adopting unified radio numerology among different cells, reduced latency and support of agile link direction switching. The robustness of ZT DFT-s-OFDM towards non-idealities such as phase noise and non-linear power amplifier is also discussed.

**SUMMARY**

The object of the present application is solved by the independent claims. Advantageous embodiments are described by the dependent claims.

**BRIEF DESCRIPTION OF THE FIGURES**

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.

FIG. 1 is a functional diagram of a 3GPP network in accordance with some embodiments.
FIG. 2 is a block diagram of a 3GPP device in accordance with some embodiments.
FIG. 3 shows a Guard Interval Discrete Fourier transform-Spread-Orthogonal Frequency Division Multiplexing (GI-DFT-s-OFDM) waveform in accordance with some embodiments.
FIG. 4 illustrates an uplink transmitter implementation in accordance with some embodiments.
FIG. 5 illustrates downlink transmitter implementation in accordance with some embodiments.
FIG. 6 illustrates a receiver implementation in accordance with some embodiments.
FIG. 7 illustrates uplink and downlink Time Division Duplexing (TDD) subframes containing guard intervals in accordance with some embodiments.
FIGS. 8A and 8B illustrate uplink and downlink TDD subframes containing guard intervals in accordance with other embodiments.
FIG. 9 illustrates a block diagram of a transmitter in accordance with some embodiments.
FIG. 10 illustrates a block diagram of a receiver in accordance with some embodiments.

FIG. 11 illustrates a flowchart of a method of transmitting symbols with a flexible guard interval in accordance with some embodiments.

## DETAILED DESCRIPTION OF THE INVENTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

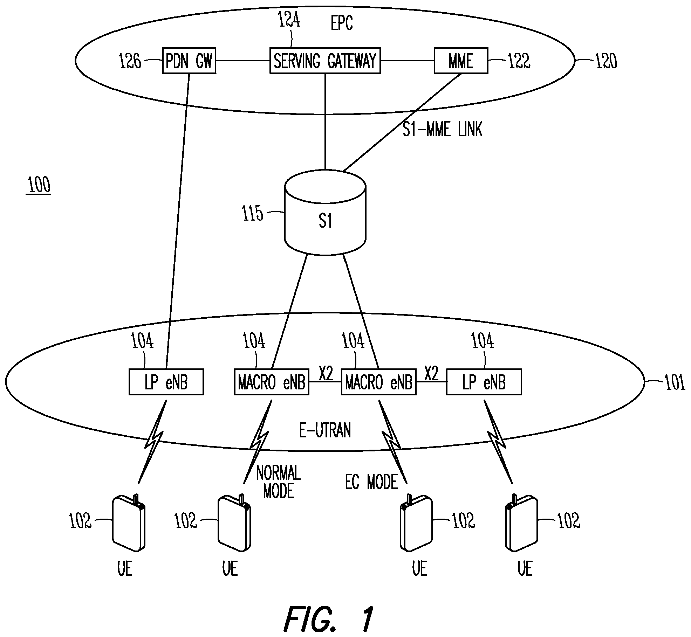

FIG. 1 is a functional diagram of a 3GPP network in accordance with some embodiments. The network may comprise a radio access network (RAN) (e.g., as depicted, the E-UTRAN or evolved universal terrestrial radio access network) 100 and the core network 120 (e.g., shown as an evolved packet core (EPC)) coupled together through an S1 interface 115. For convenience and brevity sake, only a portion of the core network 120, as well as the RAN 100, is shown.

The core network 120 includes mobility management entity (MME) 122, serving gateway (serving GW) 124, and packet data network gateway (PDN GW) 126. The RAN 100 includes Evolved Node-Bs (eNBs) 104 (which may operate as base stations) for communicating with UE 102. The eNBs 104 may include macro eNBs and low power (LP) eNBs.

The MME is similar in function to the control plane of legacy Serving GPRS Support Nodes (SGSN). The MME manages mobility aspects in access such as gateway selection and tracking area list management. The serving GW 124 terminates the interface toward the RAN 100, and routes traffic packets (such as data packets or voice packets) between the RAN 100 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates a SGi interface toward the packet data network (PDN). The PDN GW 126 routes traffic packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. The eNBs 104 may communicate both with UEs 102 in a normal coverage mode and UEs 104 in one or more enhanced coverage modes. In some embodiments, an eNB 104 may fulfill various logical functions for the RAN 100 including but not limited to RNC (radio network controller functions) such as radio bearer management, uplink and downlink dynamic radio resource management and traffic packet scheduling, and mobility management. In accordance with embodiments, UEs 102 may be configured to communicate OFDM communication signals with an eNB 104 over a multicarrier communication channel in accordance with an OFDMA communication technique. The OFDM (or SC-FDMA) signals may comprise a plurality of orthogonal subcarriers. Other technologies may also be used, such as Non-Orthogonal Multiple Access (NOMA), Code Division Multiple Access (CDMA), and Orthogonal Frequency-Division Multiple Access (OFDMA).

The S1 interface 115 is the interface that separates the RAN 100 and the EPC 120. It is split into two parts: the S1-U, which carries traffic packets between the eNBs 104 and the serving GW 124, and the SI-MME, which is a signaling interface between the eNBs 104 and the MME 122.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

Communication over an LTE network may be split up into 10ms frames, each of which may contain ten 1ms subframes. Each subframe of the frame, in turn, may contain two slots of 0.5ms. The eNB may schedule uplink and downlink transmissions over a variety of frequency bands. The allocation of resources in subframes used in one frequency band and may differ from those in another frequency band. Each slot of the subframe may contain 6-7 symbols, depending on the system used. In some embodiments, the subframe may contain 12 or 24 subcarriers. A resource grid may be used for downlink and uplink transmissions between an eNB and a UE. The resource grid may be a time-frequency grid, which is the physical resource in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE in the current 3GPP standard. A resource block may be 180 kHz wide in frequency and 1 slot long in time. In frequency, resource blocks may be either 12 x 15 kHz subcarriers or 24 x 7.5 kHz subcarriers wide. For most channels and signals, 12 subcarriers may be used per resource block, dependent on the system bandwidth. The duration of the resource grid in the time domain corresponds to one subframe or two resource blocks. Each resource grid may comprise 12 (subcarriers) * 14 (symbols) =168 resource elements for normal cyclic prefix (CP) case. Several different physical channels may be conveyed using such resource blocks.

There may be several different physical downlink channels that are conveyed using such resource blocks, including the physical downlink control channel (PDCCH) and the physical downlink shared channel (PDSCH). Each subframe may be partitioned into the physical downlink control channel (PDCCH) and the PDSCH. The PDCCH may normally occupy the first two symbols of each subframe and carry, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE.

The PDCCH may contain downlink control information (DCI) in one of a number of formats that tells the UE how to find and decode data, transmitted on PDSCH in the same subframe, from the resource grid. The DCI may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the RNTI, which may be UE-specific, may limit decoding of the DCI information (and hence the corresponding PDSCH) to only the intended UE. The PDCCH may be located in any of a number of frequency/temporal regions, depending on whether the PDCCH is UE-Specific or common, as well as the aggregation level. The set of possible locations for PDCCH is called the search space. The search space indicates the set of Control Channel Element (CCE) locations where the UE may find its PDCCHs. A common search space may carry DCIs that are common for all UEs; for example, system information (using the SI-RNTI), paging (P-RNTI), PRACH responses (RA-RNTI), or UL TPC commands (TPC-PUCCH/PUSCH-RNTI). A UE-specific search space may carry DCIs for UE-specific allocations using a control RNTI (C-RNTI) assigned to the UE, a semi-persistent scheduling (SPS C-RNTI), or an initial allocation (temporary C-RNTI). As the UE may not know the exact DCI format, nor the location in time and frequency where the PUCCH may be transmitted by the eNB, the UE may thereby rely on blind decoding attempts. In addition to the PDCCH, an enhanced PDCCH (EPDCCH) may be used by the eNB and UE. Different UEs may have different EPDCCH configurations. The EPDCCH may be configured, for example, via Radio Resource Control (RRC) signaling.

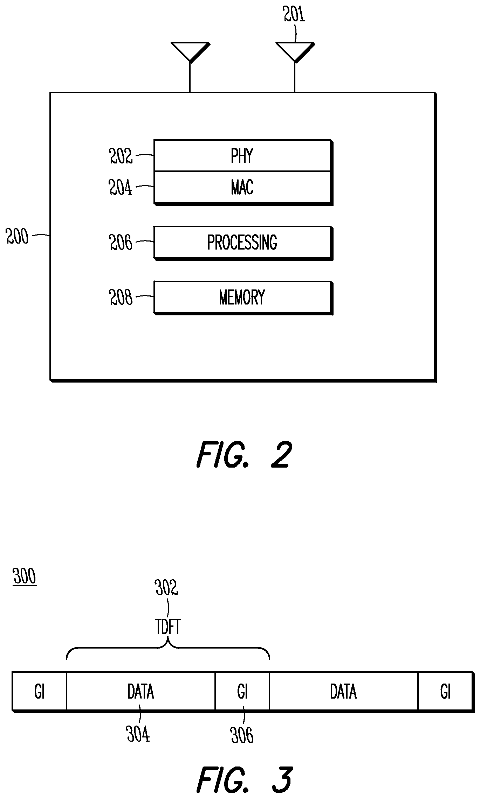

FIG. 2 is a functional diagram of a 3GPP device in accordance with some embodiments. The device may be a UE or eNB, for example. In some embodiments, the eNB may be a stationary non-mobile device. The 3GPP device 200 may include physical layer circuitry 202 for transmitting and receiving signals using one or more antennas 201. The 3GPP device 200 may also include medium access control layer (MAC) circuitry 204 for controlling access to the wireless medium. The 3GPP device 200 may also include processing circuitry 206 and memory 208 arranged to perform the operations described herein.

In some embodiments, mobile devices or other devices described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the mobile device or other device can be a UE 102 or eNB 104 configured to operate in accordance with 3GPP standards. In some embodiments, the mobile device or other device may be configured to operate according to other protocols or standards, including IEEE 802.11 or other IEEE standards. In some embodiments, the mobile device or other device may include one or more of a keyboard, a display, a non-volatile memory port, multiple antennas, a graphics processor, an application processor, speakers, and other mobile device elements. The display may be an LCD screen including a touch screen.

The antennas 201 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 201 may be effectively separated to take advantage of spatial diversity and the different channel characteristics that may result.

Although the 3GPP device 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

The term "machine readable medium" may include a single medium or multiple media (e.g., a centralized or distributed database, and/or associated caches and servers) configured to store one or more instructions. The term "machine readable medium" may include any medium that is capable of storing, encoding, or carrying instructions for execution by the 3GPP device 200 and that cause it to perform any one or more of the techniques of the present disclosure, or that is capable of storing, encoding or carrying data structures used by or associated with such instructions. The term "transmission medium" shall be taken to include any intangible medium that is capable of storing, encoding or carrying instructions for execution, and includes digital or analog communications signals or other intangible medium to facilitate communication of such software.

As described above, delay spread is generated by a receiver receiving OFDM symbols from a transmitter via different paths. To combat this, a guard interval (GI) containing a cyclic prefix (CP) may be added before the start of each OFDM symbol to provide protection against multi-path delay spread. The cyclic prefix may typically comprise replication of the last portion of a symbol disposed at the first part of the symbol thereby creating a guard between the symbol and the adjacent symbol. Cyclic prefixes may range in size from 1/4 to 1/32 of a symbol period. A receiver may locate the start of a symbol through a high correlation between the cyclic prefix and the last part of the current symbol, and subsequently start decoding the symbol. The duration of the cyclic prefix may be designed to be greater than the duration of the maximum delay spread in an OFDM system. The cyclic prefix may not carry any useful data and thus represents overhead to be minimized as it takes longer to transfer the same actual information.

A zero-insertion guard interval or a fixed guard interval may also be used rather than a cyclic prefix. However, the zero-insertion guard interval implementation may have issues related to autocorrelation and may generate abrupt transmission power transitions, causing transient distortion in the transmitter power amplifier. The use of a fixed guard interval may result in tailoring the system to the worst-case delay spread, thereby reducing system efficiency.

It thus may be desirable to adjust the length of the guard interval to be environmental-specific. In urban environments, the propagation at millimeter frequencies (e.g., 28 GHz, 60 GHz, etc.) may show a higher degree of variability in multipath delay spread as compared with lower frequency communication systems. As the multipath effects (delay spread) may differ between urban (likely smaller path length differences) and rural (likely longer path length differences) environments, it may be desirable to use a different cyclic prefix length. A normal cyclic prefix may have a duration of 4.7 $\mu$s (representing a distance of 1.4 km) resulting in 7 (data) symbols per slot, and an extended cyclic prefix may have a duration of 16.67 $\mu$s, resulting in 6 symbols per slot. Thus, while LTE-A may be designed to support a few cyclic-prefix lengths, different cyclic prefix configurations (symbol duration, cyclic prefix length and Transmission Time Interval (TTI) length) as yet have not been defined to enable use of a re-configurable cyclic prefix. Moreover, some environments, such as those of small cells with reduced coverage, may see a much smaller delay spread than even urban environments, for which a reduction in the cyclic prefix length may be desirable but the 3GPP standard currently does not support. In some embodiments, it may accordingly be useful to vary the size of the guard interval dependent on the delay spreads.

In more detail, the delay spread in some embodiments may be dependent on the transmission mechanism. For example, although in microwave systems the delay spread may mainly be determined by the environment itself, mmWave channel delay spreads may also be sensitive to beamforming techniques used in transmission. One example of the delay spread cumulative distribution function for a beamformed channel and pre-beamformed omnidirectional channel indicates that the RMS delay spread decreases by a factor of 3-4 post beamforming. Thus, using a re-configurable guard interval of varying lengths may reduce the overhead and optimize system efficiency as the environmental conditions change.

Moreover, while a cyclic prefix typically may carry mere replication of the actual data of the symbol, this data may essentially be discarded. Thus, in some embodiments, the guard interval may be designed to carry a guard interval sequence used to fulfill a predetermined set of design criteria, such as time/frequency synchronization/tracking. Consequently, the number of cell-specific reference signals per subframe may be reduced or removed altogether.

In some embodiments, Discrete Fourier Transformation-Spread-Orthogonal Frequency Division Multiplexing (DFT-s-OFDM) modulation with a flexible, configurable guard interval of variable size (GI-DFT-s-OFDM) may be employed. DFT-S-OFDM is a communication scheme that may be implemented to overcome issues with high peak-to-average power ratio (PAPR), for example, in the OFDM and OFDMA communication schemes. DFT-S-OFDM may spread signals with a DFT in the frequency domain before generating OFDM signals. The signals spread may then be modulated and transmitted using conventional OFDM techniques. GI-DFT-s-OFDM or single carrier block transmission (GI-SCBT) may employ a fixed symbol length regardless of guard interval length, making dynamic adaptation of the guard interval easier.

The size of the guard interval may be adjusted to accommodate the maximum delay spread in a given scenario, e.g., normal operating environments, a LTE uplink small cell with limited coverage, or a mmWave small cell. In some embodiments, the system design may be based on a GI-SCBT or GI-DFT-s-OFDM scheme that can be applied to a wide variety of systems with different channel delay spread characteristics.

A transmission format and transceiver structure for DFT-s-OFDM systems (e.g., for uplink LTE, mmWave, etc.) with a variable guard interval may exploit the use of a known variable-length information sequence (hereinafter referred to as a guard interval sequence) to be sent, rather than using a cyclic prefix in the guard interval. The variability of the guard interval may permit automatic adaptation of the guard interval length dependent on the channel delay spread on a per-cell basis (for FDM systems) or on a per-user basis (for TDM systems), for example. In this case, a-priori knowledge of the channel conditions may be avoidable for configuration of a given system, in addition to minimizing cyclic prefix/guard interval-related overheads, as the guard interval length can be determined on the fly using pilot symbols enabling determination of the delay spread. This may also enable a uniform design for a 5G air interface by supporting systems for different application scenarios, Radio Access Technologies, etc.

The guard interval sequence may also be used for time/frequency tracking and thus may be designed to have good autocorrelation and cross-correlation properties to minimize the effect of inter-cell interference. Various options for the subframe structure of GI-DFT-s-OFDM or GI- SCBT systems may be used, including packing guard interval symbols into one TTI. The TTI may be the smallest unit of time, for example 1ms, in which the eNB is capable of scheduling any UE for uplink or downlink transmission. In SCBT systems for example, the guard interval may be used to separate consecutive blocks, which may then be processed at the receiver, typically in the frequency domain.

In other embodiments, however, GI-DFT-s-OFDM or GI-SCBT may use a fixed symbol length regardless of guard interval length, simplifying the guard interval adaptation. In such an embodiment, an adaptive or configurable guard interval with fixed DFT size and numerology may be used, as well as using a guard interval sequence that may be optimized for design criteria/target such as time/frequency synchronization/tracking.

In mmWave small cell design for example, it may be desirable to pack the guard interval symbol of the GI-DFT-s-OFDM into each subframe due to the TDD configuration and TTI while still providing cyclic convolution (guard intervals at the end of each data symbol transmission) to reduce intersymbol interference or provide protection from delay spread. The GI-DFT-s-OFDM waveform and transceiver block is described herein, as are uplink and downlink implementations, subframe configurations, a guard interval sequence design and signaling to determine the guard interval sequence length.

FIG. 3 shows a GI-DFT-s-OFDM waveform in accordance with some embodiments. In embodiment in which a random guard interval sequence that does not carry symbol data is formed by copying the last few data samples and appending them to the beginning of the symbol, the cyclic prefix may not be considered part of the DFT interval and thus increases the length of the overall symbol from $T_{DFT}$ to $T_{DFT} + T_{GI}$. Unlike these embodiments, the GI-DFT-s-OFDM waveform 300 shown in FIG. 3, the DFT interval 302 comprises both the data 304 of the symbol 302 and the GI 306 appended at the end of the block 302. In addition, an additional guard interval may be inserted before the initial block of a TTI, thereby reducing the size of the data of the initial block. The total length of the symbol 302, however, may remain constant at $T_{DFT}$.

The GI 306 may be a fixed, apriori known sequence. The known GI 306 may be utilized for time/frequency tracking and/or channel estimation. Additionally, as the GI 306 is part of the symbol 302, the length of each of the data 304 and GI 306 may be varied as long as the total length of the symbol 302 remains constant. Following the TDD frame structure, a TTI with 70 blocks (symbols) for OFDM, or GIDFTsOFDM 75 symbols per TTI, is described as part of a 1 ms frame including 10 TTI.

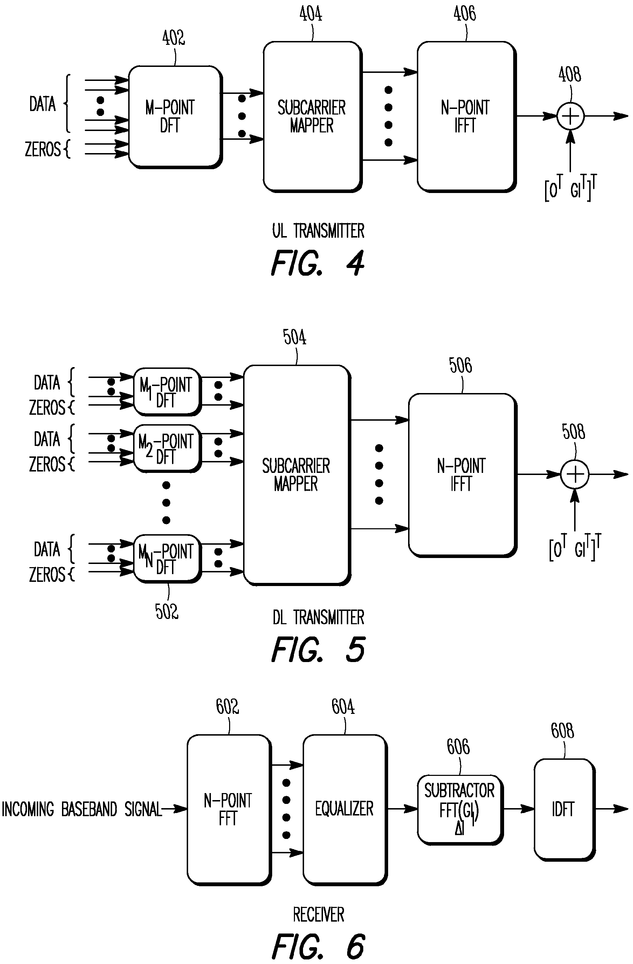

FIG. 4 illustrates an uplink transmitter implementation in accordance with some embodiments. The embodiment of FIG. 4, which may be disposed in a particular UE, includes an M-point DFT block 402 to which may be supplied data and zeros and provide a discrete Fourier transform. The data may be that of the symbol or symbols to be transmitted. The size of the discrete Fourier transform may be equal to the physical resource block size allocated to the particular UE. Based on configuration signaling, a guard interval length, and thus number of zeros, may be selected that satisfies the maximum delay spread on a per-cell or a per-user/device basis. The data symbols may be Quadrature Amplitude Modulated (QAM) data symbols and may be succeeded by a zero tail, the length of which may be the length of the guard interval times the ratio M/N, where M is the number of points of the DFT and N is the number of points of an inverse Fourier transform (IFFT). The zeros may thus be placeholders for the guard interval sequence to be inserted.

After performing a discrete Fourier transform on the input, the output of the DFT block 402 may be mapped to particular subcarriers by a subcarrier mapper 404 to provide frequency spreading of the discrete data from the DFT 402 to different subcarriers. Once mapped to the individual subcarriers, the symbols may be subjected to an N-point IFFT at an IFFT block 406. The output from the IFFT block 406 may be provided to a combiner 408, where the guard interval sequence are added to the almost-zero output sequence from the IFFT block 406 replaced prior to amplification by a power amplifier and transmission by an antenna. The DFT block 402, subcarrier mapper 404, IFFT block 406 and combiner 408 may be separate components within a UE shown in FIGS. 1 and 2 or may be implemented by a particular processor within the UE.

FIG. 5 illustrates downlink transmitter implementation in accordance with some embodiments. The downlink transmitter of FIG. 5, which may be disposed in a particular eNB serving a number of UEs, may comprise a plurality of DFT blocks 502. Each DFT blocks 502 may correspond to a different UE. Similar to the embodiment of FIG. 4, the size of the DFT $M_i$ for the ith UE may be equal to the PRB allocation size of the ith UE. The number of zeros inserted at the tail of the data for a particular UE (the ith UE) before DFT spreading may be equal to the length of the desired guard interval multiplied by the ratio $M_i/N$, where N is IFFT size and thus number of DFT blocks 502. In various embodiments, the number of zeros (and thus guard interval sequence) may be the same or may differ between UEs.

After performing a discrete Fourier transform on the input to the DFT blocks 502, the output of the DFT block 502 may be mapped to particular subcarriers by a subcarrier mapper 504. Once mapped to the individual subcarriers, the symbols may be subjected to an N-point IFFT at an IFFT block 506. The output from the IFFT block 506 may be provided to a combiner 508, where the guard interval sequence are added to the almost-zero output sequence from the IFFT block 506 prior to being amplified by a power amplifier and transmission by an antenna. In case of spatially separated UEs, which may be the case for mmWave systems, downlink transmission may be similar to uplink transmission using a DFT block spread in the data symbols over the entire bandwidth of the LTE system (e.g., 20MHz). The DFT block 502, subcarrier mapper 504, IFFT block 506 and combiner 508 may be separate components within an eNB shown in FIGS. 1 and 2 or may be implemented by a particular processor within the eNB.

FIG. 6 illustrates a receiver implementation in accordance with some embodiments. The receiver structure may be similar to the structural implementations shown in FIGS. 4 and 5. The receiver may processes symbols in blocks of size $T_{DFT}$, which, as above, comprise data symbols and guard interval. The receiver of FIG. 6 includes an N-point FFT block 602 to which may be supplied an incoming baseband signal, and in response provide a Fast Fourier Transform. The FFT block 602 may provide N discrete individual signals designated for different frequencies.

After performing the FFT on the baseband input communication signal, the output of the FFT block 602 may be provided to an equalizer 604. The equalizer 604 may provide equalization in the frequency domain to the transformed signal to compensate for the different phases and amplitudes of the symbol as received via different paths.

The equalizer 604 output may subsequently be supplied to a subtractor 606. The subtractor 606 may subtract the contributions of the guard intervals (i.e., the guard interval sequences) on the data subcarriers. In some embodiments, the eNB may subtract the contribution of all guard intervals for uplink operation. In some embodiments, only one guard interval may be used for all UEs for downlink operation, and thus the UE knowledge may be limited to the guard interval to subtract its contribution to the data subcarriers. This permits guard intervals of different lengths to be used without modifying the DFT size $T_{DFT}$.

The output from the subtractor 606 may be provided to an inverse DFT (IDFT) block 608, where the QAM data symbols are extracted through an IDFT operation. The FFT block 602, equalizer 604, subtractor 606 and IDFT block 608 may be separate components within a receiver shown in FIGS. 1 and 2 or may be implemented by a particular processor within the receiver.

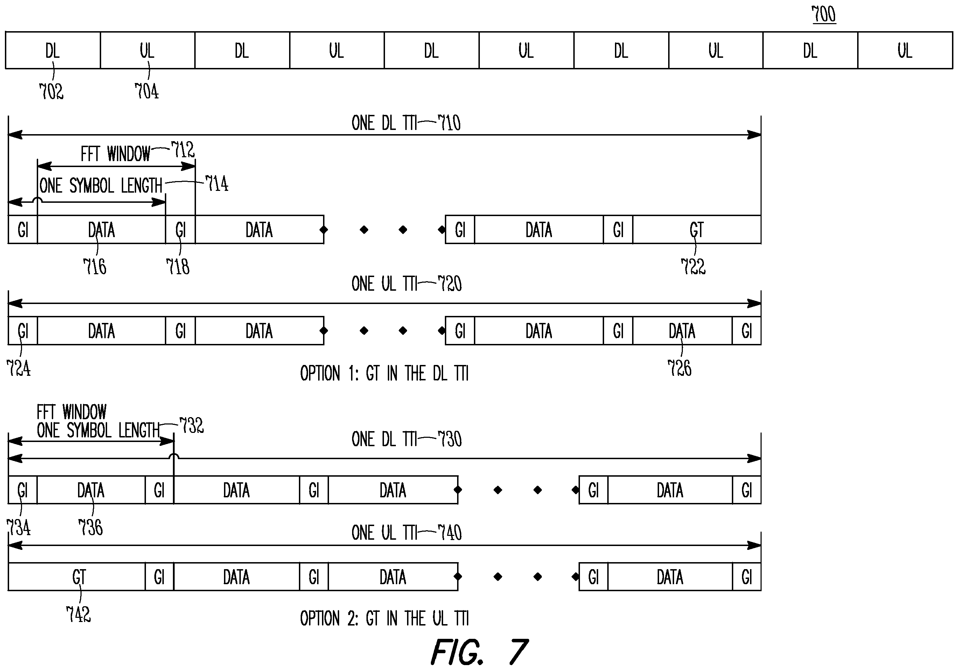

FIG. 7 illustrates uplink and downlink TDD subframes containing guard intervals in accordance with some embodiments. The transmission TDD frame structure 700 shown in FIG. 7 may contain alternating downlink subframes 702 and uplink subframes 704. The placement of the uplink and downlink subframes 702, 704 are merely exemplary. The uplink and downlink subframes 702, 704 may comprise SC data symbols or DFT-s-OFDM data symbols and guard intervals.

The uplink and downlink TTIs 710, 720, 730, 740 may contain multiple data symbols and guard intervals. Both the FFT window 712, 732, which may be used for demodulation, and the length of the symbol 714, 734, which may be used for counting symbols to be packed into one TTI, may be of the same length. This length may be a symbol duration, which comprises the length of a data symbol 716 and a guard interval 718. However, in the first set of uplink and downlink TTIs 710, 720, the FFT window 712 for demodulation and symbol duration 714 may not entirely overlap. Typical values for the various elements of FIG. 7 include a TTI of 0.1ms, a subcarrier spacing of 750KHz, a symbol duration of 1.33µs and 75 symbols per TTI. Other subcarrier spacings, such as 480KHz, may be used, with the corresponding values adjusted accordingly. For the TDD frame structure shown, the guard time may include the round trip delay (twice the propagation delay) and twice the Tx/Rx switching delay and power amplifier settling time (for the transmitter and receiver). In one example, for a 100m cell, the round trip delay may be 666.67ns, the Tx/Rx switching delay may be 10-20 ns, and the power amplifier setting time may be around 100ns. Overall, the guard time (GT) may thus be at least about 800-900ns.

In the first set of uplink and downlink TTIs 710, 720 of FIG. 7, the guard time 722 may be disposed within the downlink TTI 710. In the second set of uplink and downlink TTIs 730, 740 of FIG. 7, the guard time 742 may be disposed within the uplink TTI 740.

In the first set of uplink and downlink TTIs 710, 720, the last symbol of the downlink TTI 710 may be a special symbol, which contains a normal sized guard interval and a guard time 722. The guard time 722 may provide a buffer for switching of the UE between transmitter mode and receiver mode, as well as providing a buffer to prevent corruption of the first symbol of the uplink TTI 720. Using the example above, the guard interval and guard time may be $1.33\mu s$, where the guard time duration is determined by the length of the guard interval used in the subframe. When adapting the guard interval, all the guard intervals in the subframe may be adapted. In one example, assuming a guard time of $1\mu s$, the maximum guard interval length that can be supported in the downlink may thus be 0.33 $\mu s$.

In addition, the last symbol 726 of the uplink TTI 720 may also be a special symbol, but not a guard time symbol. In particular, the data duration of the last symbol 726 of the uplink TTI 720 may be less than the data duration in the first symbols (symbols 1-74 per the above example of 75 symbols in each TTI) of the uplink TTI 720 to fit in an extra guard interval 724 before the initial symbol of the uplink TTI 720 to maintain cyclicity. In GI-DFT-s-OFDM, this can be accomplished, in one embodiment, by mapping data to selective subcarriers, for alternative subcarriers to obtain half of the symbol duration. In another embodiment, a greater number of zeros may be inserted before the DFT spreading. In GI-SCBT, partial data blocks may be transmitted when the same sized DFT and IFFT are used, or, in another embodiment similar to the above, a greater number of zeros may be used when the DFT and IFFT size are different. In some embodiments, the guard time and/or subframe of shorter data duration may be in a subframe other than the last subframe of the TTI.

In the second set of uplink and downlink TTIs 730, 740, the guard time 742 may be disposed in the uplink TTI 740. Unlike the first set of uplink and downlink TTIs 710, 720, in which the guard time 722 may be disposed in the downlink TTI 710, the guard time 742 may be disposed in the first symbol of the uplink TTI 740. Similar to the previous embodiment, the first symbol 732 of the downlink TTI 730 may again be a special symbol that contains an additional guard interval 734 and a shortened data symbol 736 compared with the data duration in the remaining downlink symbols. Thus, in the downlink TTI 730, the first symbol may be generated by shortened data transmission with a guard interval in the beginning as well as at the end of the symbol. In some embodiments, the data in the first symbol may be training sequence for beam tracking, channel estimation or other functionality. In some embodiments, the guard intervals (and guard times) may have different durations between the uplink and downlink TTIs while in other embodiments the guard intervals may be the same duration.

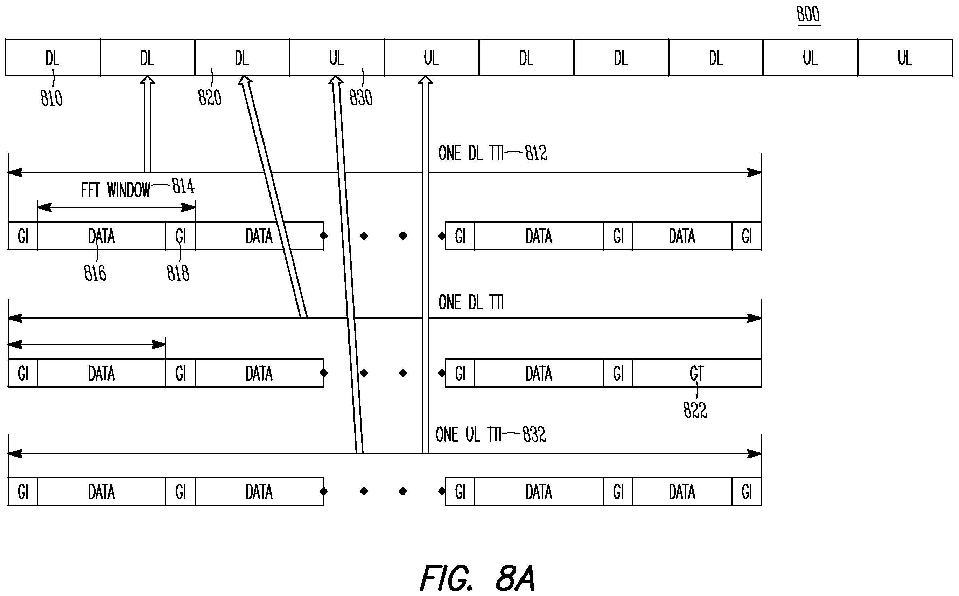

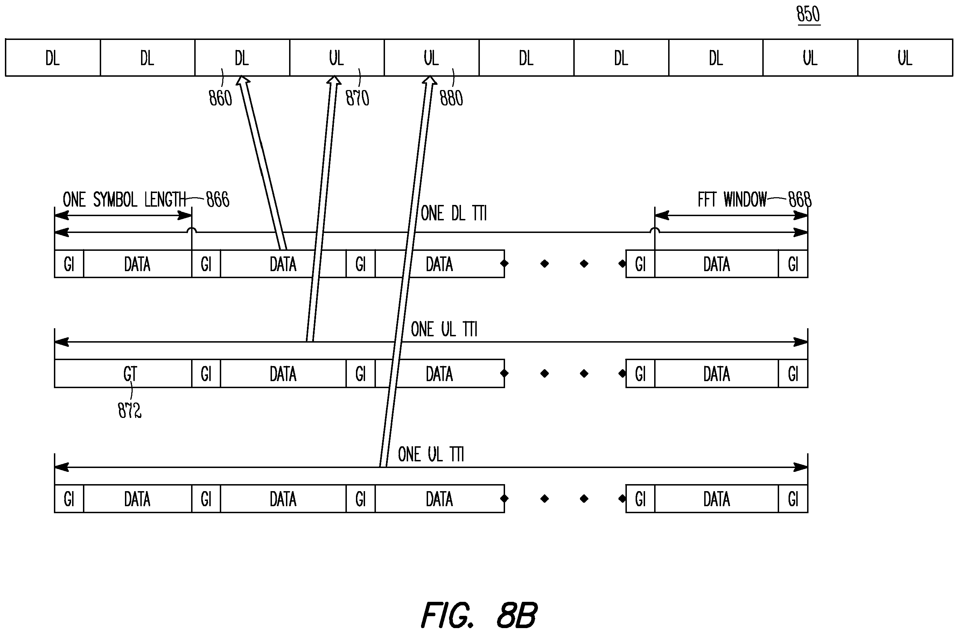

FIGS. 8A and 8B illustrate uplink and downlink TDD subframes containing guard intervals in accordance with other embodiments. The transmissions in FIGS. 8A and 8B may have similar characteristics as the transmissions in FIGS. 7A and 7B. A transmission TDD frame structure 800 shown in FIG. 8A may contain a first set of consecutive downlink subframes 810, 820 and a second set of uplink subframes 830 in which a guard time is disposed in one of the downlink subframes 820. The placement of the uplink and downlink sub frames 810, 820, 830 as above, is merely exemplary. In some embodiments, the sets may have a fewer number of subframes or a greater number of subframes than the number of subframes shown. In some embodiments, the number of subframes in each set may be the same or may differ between uplink and downlink subframes. The downlink 810, 820 and uplink 830 subframes may each comprise SC data symbols or DFT-s-OFDM data symbols 816 and guard intervals 818.

As above, the uplink and downlink TTIs 812, 832 may contain multiple data symbols 816 and guard intervals 818. The FFT window 814, which may be used for demodulation, may have a length of a symbol duration, which comprises the length of a data symbol 816 and a guard interval 818. The guard time 822 may be disposed within the downlink TTI 812 of the final downlink sub frame 820 of the set of downlink subframes 820 adjacent to the initial uplink subframe 830 in the set of uplink subframes 830. In the downlink TTI 812 of the final downlink subframe 820 of the set of downlink subframes, the last symbol of the downlink TTI 820 (the last symbol prior to the uplink subframe 830 may be a special symbol that contains a guard time 822. As above, when adapting the guard interval 818, all the guard intervals in each downlink and uplink subframe 810, 820, 830 may be adapted.

Similarly, a transmission TDD frame structure 850 shown in FIG. 8B may contain a first set of consecutive downlink subframes 860 and a second set of uplink subframes 870, 880 in which a guard time is disposed in one of the uplink subframes 870. The placement of the downlink and uplink subframes 860, 870, 880 as above, is merely exemplary. In some embodiments, the sets may have a fewer number of subframes or a greater number of subframes than the number of subframes shown. In some embodiments, the number of subframes in each set may be the same or may differ between uplink and downlink subframes. The downlink 860 and uplink 870, 880 subframes may each comprise SC data symbols or DFT-s-OFDM data symbols and guard intervals.

As above, the uplink and downlink TTIs may contain multiple data symbols and guard intervals. The FFT window 868 may be a symbol duration, which comprises the length of a data symbol and a guard interval. The length of the symbol 866 may be of the same length as the FFT window 868. The guard time 872 may be disposed within the uplink TTI 812 of the initial uplink subframe 870 adjacent to the final downlink subframe 860 in the set of downlink subframes 860. In particular, the first symbol of the uplink TTI (the first symbol after the downlink subframe 860) may be a special symbol that contains a guard time 822. As above, when adapting the guard interval, all the guard intervals in each downlink and uplink subframe 860, 870, 880 may be adapted. Moreover, the longest the guard interval duration may be limited by the duration of the guard time 872. In either transmission TDD frame structure shown in FIG. 8A or 8B, each TTI may be scheduled to different users. Each TTI may thus begin and end with a guard interval to ensure cyclicity and hence no ISI in the first and last data block for demodulation.

In some embodiments, the guard interval may be designed to have good time domain autocorrelation for time/frequency tracking and good cross-correlation properties between different guard intervals to reduce interference from the guard intervals transmitted on the same resources in other cells (and for FDM multiplexed UEs in uplink the same cells). In some embodiments, Zadoff-Chu (ZC) sequences as described in equation (1) below are used for the guard intervals:

$$a_{q(n)} = exp\left[-\frac{j2\pi q\, n(n+1)/2}{N_{ZC}}\right], q = 1, \ldots, N_{ZC} - 1 \; and \; n = 0, \ldots, N_{ZC} - 1 \qquad (1)$$

Guard intervals formed using ZC sequences may have the auto and cross-correlation properties of the guard intervals exhibiting ideal cyclic correlation and optimal cross-correlation.

To maintain good out-of-band emission properties, a guard interval sequence may be generated in the frequency domain and upsampled using an IDFT of size equal to the delay spread the system desires to account for, say $N_{GI}$. Some embodiments may use an upsampling rate of 2. In some embodiments, the length of the ZC sequence $N_{ZC}$ may be selected to be the largest prime number smaller than or equal to $N_{GI}/2$. The ZC sequence may also be cyclically extended to desired length $N_{GI}/2$ as provided in equation (2).

$$r_q(n) = a_q\left(n \bmod N_{ZC}\right), n = 0, 1, \ldots, N_{GI}/2 - 1 \qquad (2)$$

The cyclic extension may preserve a constant amplitude property of ZC sequences.

For uplink communications, in order for a cell to support different guard interval lengths, each cell may be assigned one base ZC sequence for each possible guard interval length. Different cells may be assigned different base sequences. Different base sequences can be obtained from (1) by using different values of q. A guard interval sequence of a particular length can be derived from the base sequence by a cyclic extension, as indicated in equation (2). Different UEs may be assigned cyclically shifted versions of the cyclically extended base sequences, with the length of the sequence assigned being long enough to handle the corresponding delay spread. As the correlation of a ZC sequence with cyclically shifted versions of itself is zero, ZC sequences are good choices for providing a guard interval sequence. Use of different base sequences for different UEs in the same cell may not be desirable because of non-zero cross-correlation between base sequences that can degrade the performance of time/frequency tracking.

For downlink communications, only one guard interval sequence may be used for transmission of symbols within a subframe because the guard interval is attached after the IFFT. Each cell may be assigned one base sequence for each possible guard interval length. Different cells may be assigned different base sequences. Cross-correlation between the base sequences may be low due to inherent properties of the ZC sequences, thus leading to low inter-cell interference.

To decide the guard interval sequence, the transmitter and receiver (e.g., UE and eNB) may agree on the choice of the flexible guard interval. The eNB may estimate the desired guard interval length based on an estimation of channel delay spread as determined using pilot symbols on the uplink transmission from the UE. The guard interval sequence may also be specific to the eNB or cell and/or UE. The eNB may subsequently signal to the UE a guard interval index to be used for both uplink and downlink communications. The guard interval sequence may thus be based on an estimation of channel delay spread, as well as cell ID or UE ID. If a cell-specific guard interval set is established, it may also be possible to obtain the cell-specific guard interval set by processing a universal guard interval set in a fashion dependent on the cell identifier, known both to eNB and attached UE. This option may reduce the amount of signaling between UE and eNB to determine the cell-specific guard interval set. The guard interval sequence may be chosen statically or semi-statically as the variation of delay spread in a wireless channel tends to be much slower than that of the received signal strength.

Several signaling schemes may be used to provide a guard interval index to the UE. This signaling may include higher layer control signaling, such as RRC signaling, or active signaling, such as via the PDCCH or PUCCH. For example, a new PDCCH field may be used to provide the guard interval index or an existing PDCCH field may be used to provide the guard interval index. Similarly, a new or existing RRC signal may be used to provide the guard interval index. The RRC signal may be periodic or aperiodic, and may be exchanged through by means of a predefined RRC field. In PDCCH/PUCCH signaling, a portion of the PDCCH/PUCCH may be reserved to signal the guard interval index. The signaling may be periodic (e.g., every subframe or predetermined number of subframes) or aperiodic, when a change in the guard interval index occurs.

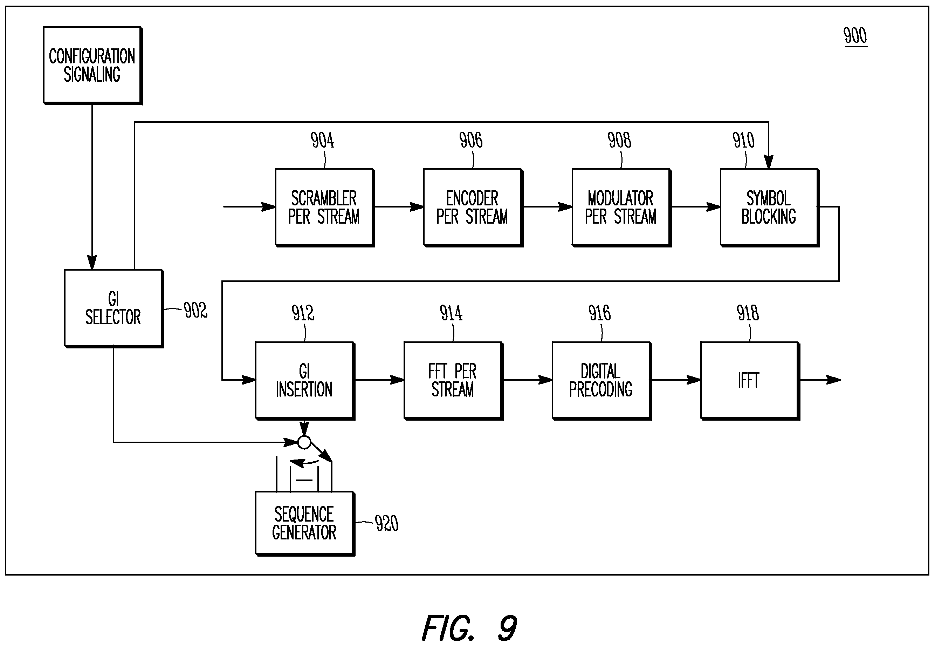

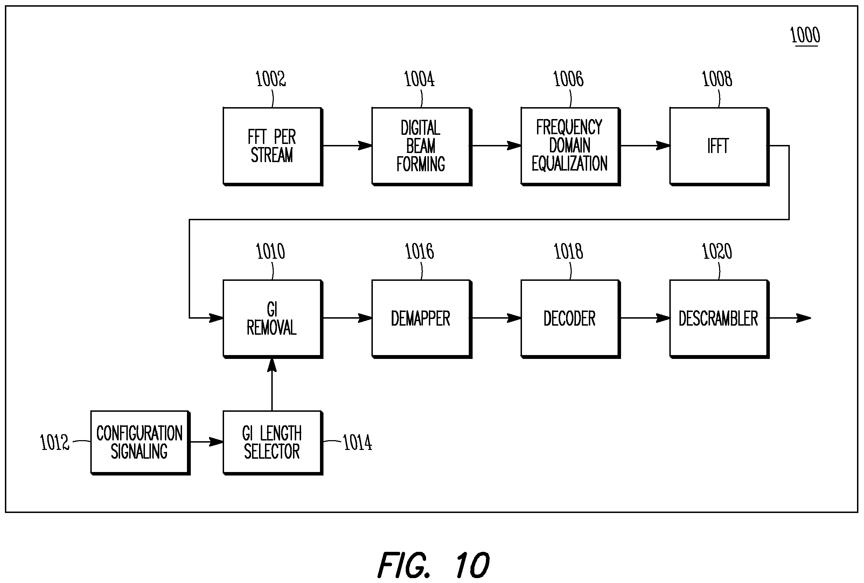

Other embodiments of the transmitter and receiver of FIGS. 4-6 are shown in FIGS. 9 and 10. In particular, FIG. 9 illustrates a block diagram of a transmitter in accordance with some embodiments. The transmitter 900, which may be the UE or eNB shown in FIGS. 1 and 2, contains control circuitry and other circuitry not shown, for example one or more: power amplifiers, filters such as bandpass filters, mixers that may upconvert/downconvert received signals between baseband and RF, and antennas that may receive the configuration signaling and transmit the symbols (including the cyclic prefix), among others. At least some of the modules described below may be implemented by a processor or may be implemented by dedicated circuitry.

In FIG. 9, configuration signaling is received either externally, e.g., from the eNB, or from a memory in the transmitter 900 based on a previous network communication. Based on configuration signaling, a GI selector 902 may determine the number of symbols per block for transmission. The GI selector 902 may also determine the appropriate guard interval sequence and duration, obtained from a sequence generator 920 connected with the GI selector 902. The sequence generator 920 may generate a number of different GI sequences based on the Zadoff-Chu sequences as described above for use by the transmitter 900. The combined length of the single carrier block, which contains the data and guard interval, may be constant for different guard interval choices, equaling the DFT size, $T_{DFT}$. The combined length may be used at both the transmitter 900 and receiver (described below) for frequency domain preprocessing and post-processing, respectively.

The transmitter 900 may also contain one or more scramblers 904 that may scramble the symbols in a particular symbol stream. In some embodiments, each symbol stream may be scrambled by the scrambler 904. Each symbol stream may then be provided to an encoder 906 in which the data bits of the symbol stream may be encoded using a particular scheme known to both the transmitter 900 and receiver to enable forward error correction. Each encoded symbol stream may then be provided to a modulator 908 in which the data bits of the encoded symbol stream may be modulated using a particular modulation scheme (e.g., QAM, DSB) known to both the transmitter 900 and receiver. Each modulated symbol stream may then be provided to a symbol blocker 910 that may be triggered by the GI selector 902 and may be used in conjunction with a GI inserter 912 to insert the appropriate guard interval (and cyclic prefix) in the symbol stream at the appropriate locations of each single carrier block.

After the guard interval has been inserted into the symbol stream by the GI inserter 912, the transmitter 900 may perform frequency domain post-processing. In particular, each symbol stream containing the guard intervals (i.e., each single carrier block) may be Fourier transformed using an FFT module 914 to compute the DFT of the symbol stream, allowing the transmitter 900 to process the single carrier block in the frequency domain and then convert the single carrier block back to the time domain. The digitized results produced by the FFT module 914 may then be beamformed by a digital precoder 916 using the appropriate phase and gain weighting for the desired transmission (e.g., SIMO or MIMO). The precoded information, containing the weighted data and cyclic prefix, may subsequently be provided to an IFFT module 918. The IFFT module 918 re-transforms the precoded information via an inverse Fourier transform to ready the information for transmission.

FIG. 10 illustrates a block diagram of a receiver in accordance with some embodiments. The receiver 1000, similar to the transmitter, contains control circuitry and other circuitry not shown, for example one or more: power amplifiers, filters such as bandpass filters, mixers that may upconvert/downconvert received signals between baseband and RF, and antennas that may receive the configuration signaling and transmit the symbols (including the cyclic prefix), among others. As above, at least some of the modules described below may be implemented by a processor or may be implemented by dedicated circuitry. The receiver 1000 may process symbols in blocks of size $T_{DFT}$, which each include the single carrier block of data symbols and following guard interval.

After being received, each symbol stream containing guard intervals may be frequency domain processed, specifically by being Fourier transformed using an FFT module 1002 to compute the DFT of the symbol stream and permit the receiver 1000 to process the single carrier blocks in the frequency domain before converting the blocks back to the time domain. The digitized results produced by the FFT module 1002 may then be de-weighted by a digital beamformer 1004 to obtain the original symbol weighting before beamforming by the transmitter. The de-weighted blocks may subsequently be provided to a frequency domain equalizer 1006 and then an IFFT module 1008, where they may be transformed back via an inverse Fourier transform to ready the information for removal of the guard interval.

The single carrier blocks from the IFFT module 1008 may next be supplied to a guard interval remover 1010. The guard interval remover 1010 may be supplied with the correct guard interval length as determined by a guard interval length selector 1014. The guard interval length selector 1014 may be provided configuration signaling received either externally, e.g., from the eNB, or from a memory in the receiver 1000. The guard interval length selector 1014 may determine the appropriate guard interval length from a plurality of potential guard interval lengths (and sequences) based on the configuration signaling. This permits guard intervals of different lengths to be used without modifying the DFT size $T_{DFT}$.

The guard interval remover 1010, upon receiving the guard interval length information from the guard interval length selector 1014, may subsequently remove the guard interval from each single carrier block. The first guard interval block of the frame may be discarded. As the first guard interval block of the frame may be used substantially only to ensure that, for the first block of the frame, the channel convolution appears cyclic at the receiver 1000. This permits the single carrier blocks to be able to be processed with frequency domain equalization (FDE) by the frequency domain equalizer 1006 to mitigate frequency-selective fading and phase distortion. At that point, based on configuration signaling, the particular guard interval is removed.

The symbol stream obtained when the guard intervals are removed by the guard interval remover 1010 may subsequently be provided to a demapper 1016, where the data bits of the symbol stream may be demodulated using the modulation scheme employed by the transmitter to modulate the symbol. The demodulated symbols, however, may remain encoded until being supplied to a decoder 1018. The decoder 1018 may employ the encryption scheme to decrypt the symbols of the single carrier blocks. The decrypted symbols may subsequently be provided to a descrambler 1020 that may descramble the symbols in a particular symbol stream that were originally scrambled by the transmitter.

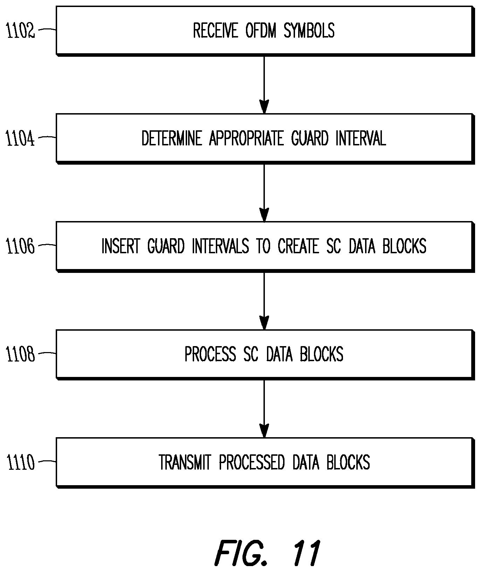

FIG. 11 illustrates a flowchart of a method of transmitting symbols with a flexible guard interval in accordance with some embodiments. The method may begin at operation 1102 when OFDM symbols are received by the UE for transmission. The OFDM symbols may be generated by any type of communication to be transmitted by the transmitter, e.g., voice data of a cellular telephone call, image data of an image, textual data of a text message, or biometric data or other sensor from a sensor, among others.

The UE may provide certain types of processing, such as scrambling, encryption and modulation to the OFDM symbols before inserting, at operation 1104, guard intervals containing cyclic prefixes to provide protection against multipath delay spread. The length of the guard interval may be variable and have a length that varies dependent on, for example, the operating environment (e.g., cell, urban or rural) and processing techniques (e.g., modulation scheme, beamforming) used. The cyclic prefix used in the guard interval may carry a sequence used for time/frequency synchronization and/or tracking. The size of the guard interval may be adjusted to accommodate the maximum delay spread, which may be estimated using environmental and operating conditions or known from previous uses. If known, the guard interval length may be stored in local memory. The guard interval length may also be determined contemporaneously using pilot symbols and provided to the UE by the network, for example in a PDCCH, RRC signaling or system information blocks. The guard interval length may be automatically adapted by the UE or signaled by the network dependent on the channel delay spread on a per-cell basis (for FDM systems) or on a per-user basis (for TDM systems).

Once the size of the guard interval is determined, the guard intervals may be inserted into a single carrier block at operation 1106. All of the guard intervals in a particular subframe may be adjusted to be the same variable length. The guard interval length may vary between subframes or frames. In some embodiments, the last symbol of a downlink transmission time interval or the first symbol of an uplink transmission time interval may contain a predetermined symbol that contains a normal sized guard interval and a guard time, while, correspondingly, the last symbol of the uplink transmission time interval or the first symbol of the downlink transmission time interval may have a smaller data duration than the data duration of the remaining to fit in an extra guard interval.

The guard interval may be designed to have good autocorrelation properties, so that the performance of time and frequency tracking algorithms is able to be maximized. The guard interval may be UE-specific (specific to the transmitter and/or receiver). Moreover, it may also be desirable that different cells use different guard intervals with low cross-correlation, so that the impact of inter-cell/inter-user interference is minimized.

The guard interval selected may be communicated and agreed between the transmitter and receiver. At an initial stage of the communication, a conservative choice of the guard interval may be used to ensure proper detection during a coarse beam search procedure. Afterwards, during fine beam search and tracking, the guard interval may be further adjusted. The eNB may estimate the required guard interval length based on the uplink transmission, exploiting channel reciprocity in the suggested uplink/downlink TDD configuration. The eNB may then signal to the UE a guard interval index to be used for both uplink and downlink transmissions. If a cell-specific guard interval set is used, it may also be possible to obtain the guard interval by processing a universal guard interval set in a manner that is dependent on the cell identifier, known both to eNB and attached UE. This may reduce the amount of signaling between UE and eNB. The guard interval sequence may be dynamically determined by the eNB or static. For example, a portion of PDCCH may be reserved to signal the guard interval index. Signaling can be periodic (every subframe, or every certain number of subframes) or aperiodic, when a change in guard interval index occurs.

After the guard interval has been inserted, in operation 1108, the UE may provide further processing of the single carrier blocks. In particular, the UE may transform each single carrier block into the frequency domain using an FFT transformation. The UE may then precode the resulting signal before transforming the signal back to the time domain using an IFFT transformation.

The UE, having inserted the variable guard intervals into the TTI and further processed the resulting combination, the UE may later transmit the data at operation 1110. The UE may transmit the data via, for example, SIMO or MIMO.

The UE further may use 4G or 5G LTE transmissions, for example, or other communication protocols.

The specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein."

**Claims**

1.  User equipment, UE (102), comprising:

    an M-point Discrete Fourier transform, DFT, block (402), wherein M is the number of points of the DFT;
    processing circuitry (206) configured to:

       generate a Time Division Duplex, TDD, frame comprising multiple blocks, each block comprising Guard Interval DFT-Spread-Orthogonal Frequency Division Multiplexing, GI-DFT-s-OFDM, symbols and a dynamically determined guard interval, GI, sequence, wherein zeros are placeholders for the guard interval sequence to be inserted and are supplied to the M-point DFT block (402); and
       configure a transceiver to transmit the TDD frame to an enhanced NodeB, eNB (104),

    wherein the GI sequence originates from at least one of:

       a frequency domain generated Zadoff-Chu, ZC, sequence upsampled by a factor of 2 using an Inverse Fast Fourier Transform, IFFT, of size two times a length of the ZC sequence,
       a ZC sequence whose base sequence of each possible GI length for both uplink and downlink communications is dependent on the eNB (104) to which the UE (102) is attached, and
       a ZC sequence whose base sequence for uplink communications is a cyclically shifted and cyclically extended version of a common base sequence that is dependent on the UE (102).

2.  The UE (102) of claim 1, wherein:
    the GI sequence is dependent on at least one of a cell identifier, ID, of a cell to which the UE (102) is configured to communicate and a UE ID.

3.  The UE (102) of claim 1 or 2, wherein:

    the frame comprises at least one of an uplink and downlink subframe,
    the at least one of an uplink and downlink subframe comprises a guard time, and
    a duration of the guard time is dependent on a length of the GI sequence in the at least one of an uplink and downlink subframe.

4.  The UE (102) of claim 3, wherein one of:

    a last block of a downlink subframe of the at least one of an uplink and downlink subframe comprises the GI sequence and the guard time while at least some of remaining blocks of the downlink subframe of the at least one of an uplink and downlink subframe and blocks of an uplink subframe of the at least one of an uplink and downlink subframe comprise the GI sequence and the one of SC and GI-DFT-s-OFDM symbol, or
    a first block of an uplink subframe of the at least one of an uplink and downlink subframe comprises the GI sequence and the guard time while at least some of remaining blocks of the uplink subframe of the at least one of an uplink and downlink subframe and blocks of a downlink subframe of the at least one of an uplink and downlink subframe comprise the GI sequence and the one of SC and GI-DFT-s-OFDM symbol.

5.  The UE (102) of one or any combination of claims 1 to 4, wherein:

a length of each block, which contains a combination of the GI sequence and the one of the SC and GI-DFT-s-OFDM symbols, is constant throughout the frame, and
one of the blocks of the frame comprises an additional GI sequence, the one of the blocks comprising a SC and GI-DFT-s-OFDM symbol of reduced size.

6. The UE (102) of claim 5, wherein the one of the blocks comprises one of:

a block of a downlink subframe of the at least one of an uplink and downlink subframe when a block of an uplink subframe of the at least one of an uplink and downlink subframe comprises a guard time, or
a block of an uplink subframe of the at least one of an uplink and downlink subframe when a block of a downlink subframe of the at least one of an uplink and downlink subframe comprises the guard time.

7. The UE (102) of one or any combination of claims 1 to 6, further comprising:

transmit control circuitry comprising at least one of a scrambler configured to scramble first SC or GI-DFT-s-OFDM symbols, a channel encoder configured to enable forward error correction for the first SC or GI-DFT-s-OFDM symbols, and a modulator configured to modulate the first SC or GI-DFT-s-OFDM symbols, and
receive control circuitry comprising a GI remover configured to remove GI sequences from received blocks to provide second SC or GI-DFT-s-OFDM symbols, a demapper configured to demodulate the second SC or GI-DFT-s-OFDM symbols, a channel decoder configured to provide forward error correction for the second SC or GI-DFT-s-OFDM symbols, and a descrambler configured to descramble the second SC or GI-DFT-s-OFDM symbols.

8. The UE (102) of one or any combination of claims 1 to 7, further comprising:
control circuitry configured to provide frequency domain post-processing of the block prior to transmitting the block, the control circuitry comprising a Discrete Fourier Transform, DFT, configured to map the block into the frequency domain, a digital receive beamformer configured to provide phase and gain weighting to the mapped block, a frequency domain equalizer configured to provide equalization to the block, and an Inverse DFT, IDFT, configured to map the equalized block back to the time domain.

9. The UE (102) of one or any combination of claims 1 to 8, wherein:
the GI sequence comprises autocorrelation and cross-correlation properties sufficient to be used for at least one of time and frequency tracking while minimizing inter-cell interference.

10. The UE (102) of one or any combination of claims 1 to 9, wherein the processing circuitry (206) is configured to:
receive a TDD second frame from the eNB (104), the second TDD frame comprising multiple blocks, each block comprising one of a second SC and GI-DFT-s-OFDM symbol and a second GI sequence having a length different than a length of the GI sequence in the TDD frame.

11. The UE (102) of claim 10, wherein the processing circuitry (206) is further configured to:

identify the second GI sequence,
remove the second GI sequence from at least one of the blocks in the second TDD frame, and
identify the second SC and GI-DFT-s-OFDM symbol in the at least one of the blocks in the second TDD frame.

12. A method performed by a user equipment, UE (102), the method comprising:

generating a Time Division Duplex, TDD, frame comprising multiple blocks, each block comprising Guard Interval Discrete Fourier transform-Spread-Orthogonal Frequency Division Multiplexing, GI-DFT-s-OFDM, symbols and a dynamically determined guard interval, GI, sequence, wherein zeros are placeholders for the guard interval sequence to be inserted and are supplied to an M-point DFT block (402), wherein M is the number of points of the DFT; and
transmitting the TDD frame to an enhanced NodeB, eNB (104),
wherein the GI sequence originates from at least one of:

a frequency domain generated Zadoff-Chu, ZC, sequence upsampled by a factor of 2 using an Inverse Fast Fourier Transform, IFFT, of size two times a length of the ZC sequence,
a ZC sequence whose base sequence of each possible GI length for both uplink and downlink communications is dependent on the eNB (104) to which the UE (102) is attached, and
a ZC sequence whose base sequence for uplink communications is a cyclically shifted and cyclically extended version of a common base sequence that is dependent on the UE (102).

13. The method of claim 12, wherein:

the frame comprises at least one of an uplink and downlink subframe,
the at least one of an uplink and downlink subframe comprises a guard time, and
a duration of the guard time is dependent on a length of the GI sequence in the at least one of an uplink and downlink subframe.

14. The method of claim 13, wherein one of:

a last block of a downlink subframe of the at least one of an uplink and downlink subframe comprises the GI sequence and the guard time while at least some of remaining blocks of the downlink subframe of the at least one of an uplink and downlink subframe and blocks of an uplink subframe of the at least one of an uplink and downlink subframe comprise the GI sequence and the one of SC and GI-DFT-s-OFDM symbol, or
a first block of an uplink subframe of the at least one of an uplink and downlink subframe comprises the GI sequence and the guard time while at least some of remaining blocks of the uplink subframe of the at least one of an uplink and downlink subframe and blocks of a downlink subframe of the at least one of an uplink and downlink subframe comprise the GI sequence and the one of SC and GI-DFT-s-OFDM symbol.

15. A non-transitory computer-readable storage medium that stores instructions for execution by one or more processors of a user equipment, UE (102), to configure the UE (102) to communicate with an enhanced Node B, eNB (104), the one or more processors being configured to carry out the method of claim 12.

**Patentansprüche**

1. Benutzergerät, UE (102), umfassend:

einen M-Punkt Discrete Fourier Transformation, DFT, Block (402), wobei M die Anzahl der Punkte der DFT ist;
Verarbeitungsschaltung (206), die konfiguriert ist zum:

Erzeugen eines Time Division Duplex, TDD, Rahmens, umfassend mehrere Blöcke, wobei jeder Block Guard Interval DFT-Spread-Orthogonal Frequency Division Multiplexing, GI-DFT-s-OFDM, -Symbole und eine dynamisch bestimmte Guard Interval, GI, Sequenz umfasst, wobei Nullen Platzhalter für die einzufügende Guard Interval Sequenz sind und dem M-Punkt DFT Block (402) zugeführt werden; und
Konfigurieren eines Sender-Empfängers zum Übertragen des TDD-Rahmens an einen Enhanced NodeB, eNB (104),
wobei die GI-Sequenz von mindestens einem der folgenden stammt:

einer Frequenzbereich-erzeugten Zadoff-Chu, ZC, -Sequenz, die um einen Faktor 2 hochabgetastet ist unter Verwenden einer Inverse Fast Fourier Transform, IFFT, mit einer Größe von zweimal einer Länge der ZC-Sequenz,
einer ZC-Sequenz, deren Basis-Sequenz jeder möglichen GI-Länge sowohl für Uplink- als auch Downlink-Kommunikationen von dem eNB (104) abhängig ist, mit dem das UE (102) verbunden ist, und
einer ZC-Sequenz, deren Basis-Sequenz für Uplink-Kommunikationen eine zyklisch verschobene und zyklisch erweiterte Version einer gemeinsamen Basis-Sequenz ist, die von dem UE (102) abhängig ist.

2. UE (102) nach Anspruch 1, wobei:
die GI-Sequenz von mindestens einem von einer Zellenkennung, ID, einer Zelle, mit der das UE (102) zum Kommunizieren konfiguriert ist, und einer UE-ID abhängig ist.

3. UE (102) nach Anspruch 1 oder 2, wobei:

der Rahmen mindestens einen von einem Uplink- und einem Downlink-Subrahmen umfasst, der mindestens eine von einem Uplink- und einem Downlink-Subrahmen eine Schutzzeit umfasst, und

eine Dauer der Schutzzeit von einer Länge der GI-Sequenz in dem mindestens einen von einem Uplink- und Downlink-Subrahmen abhängig ist.

4. UE (102) nach Anspruch 3, wobei einer von:

ein letzter Block eines Downlink-Subrahmens des mindestens einen von einem Uplink- und Downlink-Subrahmen die GI-Sequenz und die Schutzzeit umfasst, während mindestens einige restliche Blöcke des Downlink-Subrahmens des mindestens einen von einem Uplink- und Downlink-Subrahmen und Blöcke eines Uplink-Subrahmens des mindestens einen von einem Uplink- und Downlink-Subrahmen die GI-Sequenz und das eine von SC und GI-DFT-s-OFDM-Symbol umfassen, oder
ein erster Block eines Uplink-Subrahmens des mindestens einen von einem Uplink- und Downlink-Subrahmens die GI-Sequenz und die Schutzzeit umfasst, während mindestens einige restliche Blöcke des Uplink-Subrahmens des mindestens einen von einem Uplink- und Downlink-Subrahmen und Blöcke eines Downlink-Subrahmens des mindestens einen von einen Uplink- und Downlink-Subrahmens die GI-Sequenz und das eine von SC- und GI-DFT-s-OFDM-Symbol umfassen.

5. UE (102) nach einer oder irgendeiner Kombination der Ansprüche 1 bis 4, wobei:

eine Länge jedes Blocks, der eine Kombination aus der GI-Sequenz und dem einen von SC- und GI-DFT-s-OFDM-Symbolen enthält, während des gesamten Rahmens konstant ist, und
einer der Blöcke des Rahmens eine zusätzliche GI-Sequenz umfasst, wobei der eine der Blöcke ein SC- und GI-DFT-s-OFDM-Symbol mit reduzierter Größe umfasst.

6. UE (102) nach Anspruch 5, wobei der eine der Blöcke eines der folgenden umfasst:

einen Block eines Downlink-Subrahmens des mindestens einen von einem Uplink- und einem Downlink-Subrahmen, wenn ein Block eines Uplink-Subrahmens des mindestens einen von einem Uplink- und Downlink-Subrahmen eine Schutzzeit umfasst, oder
einen Block eines Uplink-Subrahmens des mindestens einen von einem Uplink- und Downlink-Subrahmens, wenn ein Block eines Downlink-Subrahmens des mindestens einen von einem Uplink- und Downlink-Subrahmen die Schutzzeit umfasst.

7. UE (102) nach einer oder irgendeiner Kombination der Ansprüche 1 bis 6, ferner umfassend:

Übertragungssteuerschaltung, umfassend mindestens einen Verwürfler, der konfiguriert ist, um erste SC- oder GI-DFT-s-OFDM-Symbole zu verwürfeln,
einem Kanalcodierer, der konfiguriert ist, um Vorwärtsfehlerkorrektur für die ersten SC- oder GI-DFT-s-OFDM-Symbole zu ermöglichen, und einem Modulator, der konfiguriert ist, um die ersten SC- oder GI-DFT-s-OFDM-Symbole zu modulieren, und
Empfangssteuerschaltung, umfassend einen GI-Entferner, der konfiguriert ist, um GI-Sequenzen aus empfangenen Blöcken zu entfernen, um zweite SC- oder GI-DFT-s-OFDM-Symbole bereitzustellen, einen Demapper, der konfiguriert ist, um die zweiten SC- oder GI-DFT-s-OFDM-Symbole zu demodulieren, einen Kanaldecoder, der konfiguriert ist, um Vorwärtsfehlerkorrektur für die zweiten SC- oder GI-DFT-s-OFDM-Symbole bereitzustellen, und einen Entwürfler, der konfiguriert ist, um die zweiten SC- oder GI-DFT-s-OFDM-Symbole zu entwürfeln.

8. UE (102) nach einer oder irgendeiner Kombination der Ansprüche 1 bis 7, ferner umfassend:
Steuerschaltung, die konfiguriert ist, um Frequenzbereich-Nachverarbeitung des Blocks vor Übertragen des Blocks bereitzustellen, wobei die Steuerschaltung eine Discrete Fourier Transformation, DFT, umfasst, die konfiguriert ist, um den Block in den Frequenzbereich abzubilden, einen digitalen Empfangsstrahlformer, der konfiguriert ist, um Phasen- und Verstärkungsgewichtung für den abgebildeten Block bereitzustellen, einen Frequenzbereich-Entzerrer, der konfiguriert ist, um Entzerrung für den Block bereitzustellen, und eine Inverse DFT, IDFT, die konfiguriert ist, um den entzerrten Block zurück in den Zeitbereich abzubilden.

9. UE (102) nach einer oder irgendeiner Kombination der Ansprüche 1 bis 8, wobei
die GI-Sequenz Autokorrelations- und Kreuzkorrelationseigenschaften umfasst, die ausreichend sind, um für mindestens eine von Zeit- und Frequenzverfolgung verwendet zu werden, während Interzellen-Interferenz minimiert wird.

**10.** UE (102) nach einer oder irgendeiner Kombination der Ansprüche 1 bis 9, wobei die Verarbeitungsschaltung (206) konfiguriert ist zum:
Empfangen eines zweiten TDD-Rahmens von dem eNB (104), wobei der zweite TDD-Rahmen mehrere Blöcke umfasst, wobei jeder Block eines von einem zweiten SC- und GI-DFT-s-OFDM-Symbol und eine zweite GI-Sequenz mit einer Länge aufweist, die verschieden ist von einer Länge der GI-Sequenz in dem TDD-Rahmen.

**11.** UE (102) nach Anspruch 10, wobei die Verarbeitungsschaltung (206) ferner konfiguriert ist zum:

Identifizieren der zweiten GI-Sequenz,
Entfernen der zweiten GI-Sequenz aus mindestens einem der Blöcke in dem zweiten TDD-Rahmen, und
Identifizieren des zweiten SC- und GI-DFT-s-OFDM-Symbols in dem mindestens einen der Blöcke in dem zweiten TDD-Rahmen.

**12.** Verfahren, durchgeführt durch ein Benutzergerät, UE (102), das Verfahren umfassend:

Erzeugen eines Time Division Duplex, TDD, Rahmens, umfassend mehrere Blöcke, wobei jeder Block Guard Interval Discrete Fourier Transformation Spread-Orthogonal Frequency Division Multiplexing, GI-DFT-s-OFDM, Symbole und eine dynamisch bestimmte Guard Interval, GI, Sequenz umfasst, wobei Nullen Platzhalter für die einzufügende Guard Interval Sequenz sind und einem M-Punkt DFT Block (402) zugeführt werden, wobei M die Anzahl der Punkte der DFT ist; und
Übertragen des TDD-Rahmens an den Enhanced NodeB, eNB (104), wobei die GI-Sequenz von mindestens einem der folgenden stammt:

einer Frequenzbereich-erzeugten Zadoff-Chu, ZC, Sequenz, die um einen Faktor 2 hochabgetastet ist unter Verwenden einer Inverse Fast Fourier Transformation, IFFT, mit einer Größe von zweimal einer Länge der ZC-Sequenz,
einer ZC-Sequenz, deren Basis-Sequenz jeder möglichen GI-Länge sowohl für Uplink- als auch Downlink-Kommunikationen von dem eNB (104) abhängt, mit dem das UE (102) verbunden ist, und
einer ZC-Sequenz, deren Basis-Sequenz für Uplink-Kommunikationen eine zyklisch verschobene und zyklisch erweiterte Version einer gemeinsamen Basis-Sequenz ist, die von dem UE (102) abhängig ist.

**13.** Verfahren nach Anspruch 12, wobei
der Rahmen mindestens einen von einem Uplink- und Downlink-Subrahmen umfasst,
der mindestens eine von einem Uplink- und Downlink-Subrahmen eine Schutzzeit umfasst, und
eine Dauer der Schutzzeit von einer Länge der GI-Sequenz in dem mindestens einen von einem Uplink- und Downlink-Subrahmen abhängig ist.

**14.** Verfahren nach Anspruch 13, wobei einer von:

ein letzter Block eines Downlink-Subrahmens des mindestens einen von einem Uplink- und Downlink-Subrahmens die GI-Sequenz und die Schutzzeit umfasst, während mindestens einige restliche Blöcke des Downlink-Subrahmens des mindestens einen von einem Uplink- und Downlink-Subrahmen und Blöcke eines Uplink-Subrahmen des mindestens einen von einem Uplink- und Downlink-Subrahmens die GI-Sequenz und das eine von SC und GI-DFT-s-OFDM-Symbol umfassen, oder
ein erster Block eines Uplink-Subrahmens des mindestens einen von einem Uplink- und Downlink-Subrahmen die GI-Sequenz und die Schutzzeit umfasst, während mindestens einige restliche Blöcke des Uplink-Subrahmens des mindestens einen von einem Uplink- und Downlink-Subrahmen und Blöcke eines Downlink-Subrahmens des mindestens einen von einem Uplink- und Downlink-Subrahmen die GI-Sequenz und das eine von SC und GI-DFT-s-OFDM-Symbol umfassen.

**15.** Nichtflüchtiges computerlesbares Speichermedium, das Anweisungen zur Ausführung durch einen oder mehrere Prozessoren eines Benutzergeräts, UE (102), speichert, um das UE (102) zum Kommunizieren mit einem Enhanced NodeB, eNB (104), zu konfigurieren, wobei der eine oder die mehreren Prozessoren konfiguriert sind, um das Verfahren nach Anspruch 12 auszuführen.

**Revendications**

1. Équipement d'utilisateur, UE (102), comprenant :

   un bloc de transformée de Fourier discrète, DFT, à M points (402), dans lequel M est le nombre de points de la DFT ;
   des circuits de traitement (206) configurés pour :

   générer une trame de duplexage par répartition dans le temps, TDD, comprenant de multiples blocs, chaque bloc comprenant des symboles de multiplexage par répartition en fréquences orthogonales étalées de DFT d'intervalle de garde, GI-DFT-s-OFDM, et une séquence d'intervalles de garde, GI, déterminée dynamiquement, dans lequel des zéros sont des paramètres fictifs pour la séquence d'intervalles de garde à insérer et sont fournis au bloc de DFT à M points (402) ; et
   configurer un émetteur-récepteur pour émettre la trame TDD vers un nœud B amélioré, eNB (104),

   dans lequel la séquence de GI provient d'au moins une parmi :

   une séquence de Zadoff-Chu, ZC, générée dans le domaine fréquentiel, suréchantillonnée par un facteur de 2 à l'aide d'une transformée de Fourier inverse rapide, IFFT, ayant une dimension de deux fois une longueur de la séquence de ZC,
   une séquence de ZC dont la séquence de base de chaque longueur de GI possible pour des communications à la fois de liaison montante et de liaison descendante dépend de l'eNB (104) auquel l'UE (102) est rattaché, et
   une séquence de ZC dont la séquence de base pour des communications de liaison montante est une version cycliquement décalée et cycliquement étendue d'une séquence de base commune qui dépend de l'UE (102).

2. L'UE (102) selon la revendication 1, dans lequel :
   la séquence de GI dépend d'au moins un parmi un identifiant, ID, de cellule d'une cellule avec laquelle l'UE (102) est configuré pour communiquer, et un ID d'UE.

3. L'UE (102) selon la revendication 1 ou 2, dans lequel :

   la trame comprend au moins une parmi une sous-trame de liaison montante et une sous-trame de liaison descendante, l'au moins une parmi une sous-trame de liaison montante et une sous-trame de liaison descendante comprend un temps de garde, et
   une durée du temps de garde dépend d'une longueur de la séquence de GI dans l'au moins une parmi une sous-trame de liaison montante et une sous-trame de liaison descendante.

4. L'UE (102) selon la revendication 3, dans lequel un parmi :

   un dernier bloc d'une sous-trame de liaison descendante de l'au moins une parmi une sous-trame de liaison montante et une sous-trame de liaison descendante comprend la séquence de GI et le temps de garde tandis qu'au moins certains blocs parmi des blocs restants de la sous-trame de liaison descendante de l'au moins une parmi une sous-trame de liaison montante et une sous-trame de liaison descendante et des blocs d'une sous-trame de liaison montante de l'au moins une parmi une sous-trame de liaison montante et une sous-trame de liaison descendante comprennent la séquence de GI et l'un parmi un symbole de porteuse unique, SC, et un symbole de GI-DFT-s-OFDM, ou
   un premier bloc d'une sous-trame de liaison montante de l'au moins une parmi une sous-trame de liaison montante et une sous-trame de liaison descendante comprend la séquence de GI et le temps de garde tandis qu'au moins certains blocs parmi des blocs restants de la sous-trame de liaison montante de l'au moins une parmi une sous-trame de liaison montante et une sous-trame de liaison descendante et des blocs d'une sous-trame de liaison descendante de l'au moins une parmi une sous-trame de liaison montante et une sous-trame de liaison descendante comprennent la séquence de GI et l'un parmi le symbole de SC et le symbole de GI-DFT-s-OFDM.

5. L'UE (102) selon l'une, ou toute combinaison, des revendications 1 à 4, dans lequel :

une longueur de chaque bloc, qui contient une combinaison de la séquence de GI et de l'un parmi les symboles de SC et les symboles de GI-DFT-s-OFDM, est constante dans toute la trame, et

un des blocs de la trame comprend une séquence de GI supplémentaire, l'un des blocs comprenant un symbole de SC et un symbole de GI-DFT-s-OFDM de dimension réduite.

**6.** L'UE (102) selon la revendication 5, dans lequel l'un des blocs comprend un parmi :

un bloc d'une sous-trame de liaison descendante de l'au moins une parmi une sous-trame de liaison montante et une sous-trame de liaison descendante lorsqu'un bloc d'une sous-trame de liaison montante de l'au moins une parmi une sous-trame de liaison montante et une sous-trame de liaison descendante comprend un temps de garde, ou

un bloc d'une sous-trame de liaison montante de l'au moins une parmi une sous-trame de liaison montante et une sous-trame de liaison descendante lorsqu'un bloc d'une sous-trame de liaison descendante de l'au moins une parmi une sous-trame de liaison montante et une sous-trame de liaison descendante comprend le temps de garde.

**7.** L'UE (102) selon l'une, ou toute combinaison, des revendications 1 à 6, comprenant en outre :

des circuits de commande d'émission comprenant au moins un parmi un brouilleur configuré pour brouiller des premiers symboles de SC ou de GI-DFT-s-OFDM, un codeur de canal configuré pour activer une correction d'erreur directe pour les premiers symboles de SC ou les premiers symboles de GI-DFT-s-OFDM, et un modulateur configuré pour moduler les premiers symboles de SC ou les premiers symboles de GI-DFT-s-OFDM, et des circuits de commande de réception comprenant un suppresseur de GI configuré pour supprimer des séquences de GI des blocs reçus pour fournir des seconds symboles de SC ou de GI-DFT-s-OFDM, un démappeur configuré pour démoduler les seconds symboles de SC ou de GI-DFT-s-OFDM, un décodeur de canal configuré pour fournir une correction d'erreur directe pour les seconds symboles de SC ou de GI-DFT-s-OFDM, et un débrouilleur configuré pour débrouiller les seconds symboles de SC ou de GI-DFT-s-OFDM.

**8.** L'UE (102) selon l'une, ou toute combinaison, des revendications 1 à 7, comprenant en outre : des circuits de commande configurés pour assurer un post-traitement dans le domaine fréquentiel du bloc avant l'émission du bloc, les circuits de commande comprenant une transformée de Fourier discrète, DFT, configurée pour mapper le bloc dans le domaine fréquentiel, un metteur en forme de faisceau de réception numérique configuré pour fournir une pondération de phase et de gain au bloc mappé, un égaliseur dans le domaine fréquentiel configuré pour fournir une égalisation au bloc, et une DFT inverse, IDFT, configurée pour remapper le bloc égalisé dans le domaine temporel.

**9.** L'UE (102) selon l'une, ou toute combinaison, des revendications 1 à 8, dans lequel : la séquence de GI possède des propriétés d'autocorrélation et d'intercorrélation suffisantes pour être utilisée pour au moins un parmi un suivi de temps et un suivi de fréquence tout en minimisant les interférences entre cellules.

**10.** L'UE (102) selon l'une, ou toute combinaison, des revendications 1 à 9, dans lequel les circuits de traitement (206) sont configurés pour :
recevoir de l'eNB (104) une seconde trame de TDD, la seconde trame TDD comprenant de multiples blocs, chaque bloc comprenant un parmi un second symbole de SC et un second symbole de GI-DFT-s-OFDM et une seconde séquence de GI ayant une longueur différente d'une longueur de la séquence de GI dans la trame TDD.

**11.** L'UE (102) selon la revendication 10, dans lequel les circuits de traitement (206) sont en outre configurés pour :

identifier la seconde séquence de GI,

supprimer la seconde séquence de GI d'au moins un des blocs dans la seconde trame TDD, et

identifier le second symbole de SC et de GI-DFT-s-OFDM dans l'au moins un des blocs dans la seconde trame TDD.

**12.** Un procédé réalisé par un équipement d'utilisateur, UE (102), le procédé comprenant :

la génération d'une trame de duplexage par répartition dans le temps, TDD, comprenant de multiples blocs, chaque bloc comprenant des symboles de multiplexage par répartition en fréquences orthogonales étalées de transformée de Fourier discrète d'intervalle de garde, GI-DFT-s-OFDM, et une séquence d'intervalles de garde, GI, déterminée dynamiquement, dans lequel des zéros sont des paramètres fictifs pour la séquence d'intervalles de garde à insérer et sont fournis à un bloc de DFT à M points (402), dans lequel M est le nombre de points de la DFT ; et

l'émission de la trame TDD vers un nœud B amélioré, eNB (104) ,

dans lequel la séquence de GI provient d'au moins une parmi :

une séquence de Zadoff-Chu, ZC, générée dans le domaine fréquentiel suréchantillonnée par un facteur de 2 à l'aide d'une transformée de Fourier inverse rapide, IFFT, ayant une dimension de deux fois une longueur de la séquence de ZC,

une séquence de ZC dont la séquence de base de chaque longueur de GI possible pour des communications à la fois de liaison montante et de liaison descendante dépend de l'eNB (104) auquel l'UE (102) est rattaché, et

une séquence de ZC dont la séquence de base pour des communications de liaison montante est une version cycliquement décalée et cycliquement étendue d'une séquence de base commune qui dépend de l'UE (102).

13. Le procédé selon la revendication 12, dans lequel :

la trame comprend au moins une parmi une sous-trame de liaison montante et une sous-trame de liaison descendante, l'au moins une parmi une sous-trame de liaison montante et une sous-trame de liaison descendante comprend un temps de garde, et

une durée du temps de garde dépend d'une longueur de la séquence de GI dans l'au moins une parmi une sous-trame de liaison montante et une sous-trame de liaison descendante.

14. Le procédé selon la revendication 13, dans lequel un parmi :

un dernier bloc d'une sous-trame de liaison descendante de l'au moins une parmi une sous-trame de liaison montante et une sous-trame de liaison descendante comprend la séquence de GI et le temps de garde tandis qu'au moins certains blocs parmi des blocs restants de la sous-trame de liaison descendante de l'au moins une parmi une sous-trame de liaison montante et une sous-trame de liaison descendante et des blocs d'une sous-trame de liaison montante de l'au moins une parmi une sous-trame de liaison montante et une sous-trame de liaison descendante comprennent la séquence de GI et l'un parmi les symboles de SC et GI-DFT-s-OFDM, ou un premier bloc d'une sous-trame de liaison montante de l'au moins une parmi une sous-trame de liaison montante et une sous-trame de liaison descendante comprend la séquence de GI et le temps de garde tandis qu'au moins certains blocs parmi des blocs restants de la sous-trame de liaison montante de l'au moins une parmi une sous-trame de liaison montante et une sous-trame de liaison descendante et des blocs d'une sous-trame de liaison descendante de l'au moins une parmi une sous-trame de liaison montante et une sous-trame de liaison descendante comprennent la séquence de GI et l'un parmi les symboles de SC et de GI-DFT-s-OFDM.

15. Un support de stockage non transitoire lisible par ordinateur qui stocke des instructions aux fins d'exécution par un ou plusieurs processeurs d'un équipement d'utilisateur, UE (102), pour configurer l'UE (102) pour communiquer avec un nœud B amélioré, eNB (104), les un ou plusieurs processeurs étant configurés pour effectuer le procédé selon la revendication 12.

FIG. 1

*FIG. 2*

*FIG. 3*

402

DATA
ZEROS

M-POINT
DFT

404

SUBCARRIER
MAPPER

406

N-POINT
IFFT

408

$[0^T \ GI^T]^T$

UL TRANSMITTER

## FIG. 4

504

DATA
ZEROS

$M_1$-POINT
DFT

DATA
ZEROS

$M_2$-POINT
DFT

DATA
ZEROS

$M_N$-POINT
DFT

502

SUBCARRIER
MAPPER

506

N-POINT
IFFT

508

$[0^T \ GI^T]^T$

DL TRANSMITTER

## FIG. 5

602

INCOMING BASEBAND SIGNAL →

N-POINT
FFT

604

EQUALIZER

606

SUBTRACTOR
FFT(GI)
ΔI

608

IDFT

RECEIVER

## FIG. 6

FIG. 7

EP 3 245 771 B1

FIG. 8A

EP 3 245 771 B1

FIG. 8B

FIG. 9

EP 3 245 771 B1

FIG. 10

1102 — RECEIVE OFDM SYMBOLS

1104 — DETERMINE APPROPRIATE GUARD INTERVAL

1106 — INSERT GUARD INTERVALS TO CREATE SC DATA BLOCKS

1108 — PROCESS SC DATA BLOCKS

1110 — TRANSMIT PROCESSED DATA BLOCKS

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• On the potential of zero-tail DFT-spread-OFDM in 5G networks. **BERARDINELLY GILBERTO et al.** 2014 IEEE 80th Vehicular Technology Conference (VTC2014-FALL). IEEE, September 2014, 1-6